# EUROPEAN PATENT SPECIFICATION

(11) **EP 4 497 274 B1**
(45) Date of publication and mention of the grant of the patent: **15.07.2026**
(21) Application number: 22717586.6
(22) Date of filing: 23.03.2022
(51) Int. Cl.: H04W 52/02

(54) **POWER EFFICIENT AND ROBUST WAKE UP SIGNALING**
LEISTUNGSEFFIZIENTE UND ROBUSTE WECKSIGNALISIERUNG
SIGNALISATION DE RÉVEIL ÉCONOME EN ÉNERGIE ET ROBUSTE

(43) Date of publication of application: 29.01.2025
(73) Proprietor: Telefonaktiebolaget LM Ericsson (publ), 164 83 Stockholm (SE)
(72) Inventor: BALAKRISHNAN, Bipin, 215 35 MALMÖ (SE); ZOU, Gang, 226 49 LUND (SE); BASTANI, Saeed, 247 56 DALBY (SE); DAHLGREN, Fredrik, 224 65 LUND (SE)
(74) Representative: Ericsson
(86) International application number: PCT/EP2022/057678
(87) International publication number: WO 2023/179852

(56) References cited:
- EP-A1- 3 639 572
- EP-B1- 3 639 572
- US-A1- 2020 053 647
- US-A1- 2021 058 866

## Description

### Technical Field

The present disclosure relates to wake-up signaling for a User Equipment (UE) in a deep sleep state.

### Background

Relay-connections using sidelink or Device-to-Device (D2D) communication has been presented in order to increase the wireless communication coverage in situations where the Radio Frequency (RF) link between a Base Station (BS) and a User Equipment (UE) may be very poor or totally lost. For example, see Third Generation Partnership Project (3GPP) Long Term Evolution (LTE) D2D Proximity Services (ProSe) and an associated study in 3GPP Technical Report (TR) 36.843 entitled "Study on LTE Device to Device Proximity Services - Radio Aspects."

On the other hand, wake-up signaling has been proposed to enable UEs to go into deep sleep and the BS to wake up the UEs with certain signaling. For example, the 3GPP LTE cellular network uses a Wake-Up Signal (WUS) to wake up Internet-of-Things (IoT) UEs. This WUS is transmitted from a BS to IoT UEs that are in idle mode (e.g., deep sleep) and required to decode the Physical Downlink Control Channel (PDCCH) in paging occasions (see, e.g., 3GPP Technical Specification (TS) 36.211 V16.1.0). In those cases, an IoT UE needs wake up to perform time and frequency synchronization, receive and decode the WUS, and further receive and decode the paging information carried in a PDCCH if the IoT finds the WUS is targeting itself. As the distance between the BS and the IoT UE is generally long, the WUS is often transmitted with a certain RF bandwidth and/or encoded in time or frequency domain to lower its miss-detection rate.

US 2020/053647 A1 discloses a method for receiving a WUS, in particular in a device-to-device, D2D, or vehicle-to-everything, V2X, communication context, by a first wireless device from a second wireless device. A synchronization signal is transmitted in a first subframe of a discovery resource pool where a discovery signal is transmitted, where the WUS is transmitted through a part of a last symbol of the first subframe. Assuming that the discovery signal starts transmitting in an n-th subframe, the WUS in an (n-k)-th subframe, where k is chosen such that the first wireless device has ample time to process received WUS.

EP 3639572 A1 discloses transmission of at least one first wake-up signal to a communication device (103) which is triggered on a direct link (181) between a network (100) and the communication device (103). Transmission of at least one second wake-up signal to the communication device (103) is triggered on a relaying link (182) between the network (100) and the communication device (103).

US 2021/058866 A1 discloses that a UE may identify a set of one or more sidelink resources, and the UE may identify wake-up signal occasions associated with the resources. The UE may monitor for wake-up signals during the wake-up signal occasions, and the UE may further monitor the associated set of one or more resources based on receiving a wake-up signal. In some examples, respective sets of one or more sidelink resources may be associated with a number of multiple-input multiple-output layers used for sidelink communications, or may indicate respective bandwidth parts used for monitoring sidelink transmissions.

Ultra-low-power UEs (e.g., IoT UEs) may be powered from a battery with very limited capacity or from energy harvested from the environment in which the UEs are located. It is important that the amount of energy consumed by these UEs for communication is kept as low as possible. Allowing these UEs to go into a deep-sleep mode (e.g., idle mode) when there is no need to communicate is one technique for minimizing energy consumption. Another technique is to minimize the amount of energy consumed while the UE is performing necessary communication such as by keeping the UE's transmit power (e.g., Uplink (UL) transmit power) as low as possible.

There are many relevant usages of ultra-low-power UEs as different types of sensors, etc. They can be deployed in an environment in which the UEs have very poor RF links to the BSs, such as in basements, behind walls, etc. This can make it very challenging to guarantee that the UE is woken up properly by the BS and also require that the UL signaling from the UE at the wake-up must occur at a very high transmit power. Furthermore, wake-up mechanisms for such ultra-low power UEs should be robust and reliable against misdetection without consuming too much additional power.

Therefore, there is a need for systems and methods providing an energy efficient yet robust solution to wake up UEs, such as ultra-low power UEs, and transfer data between those UEs and the BS.

### Summary

Apparatuses and methods are disclosed for power efficient and robust wake-up signaling. In one embodiment, a method performed by a relay User Equipment (UE) for a cellular communications system according to claim 1 is provided.

The corresponding embodiment of a relay UE is disclosed in claim 6.

A method performed by a remote UE according to claim 8 is provided.

The corresponding embodiment of a remote UE is disclosed in claim 14.

Preferred alternatives are provided in the dependent claims.

### Brief Description of the Drawings

The accompanying drawing figures incorporated in and forming a part of this specification illustrate several aspects of the disclosure, and together with the description serve to explain the principles of the disclosure.
Figure 1 illustrates a system in which embodiments of the present disclosure may be implemented;
Figure 2 is a flow chart that illustrates the operation of a base station, a relay User Equipment (UE), and a remote UE for Low Power Wake-Up (LPWUS) signaling in accordance with one embodiment of the present disclosure;
Figures 3A, 3B, 4A, and 4B illustrate example subframes in which a synchronization signal and a LPWUS are transmitted in accordance with example embodiments of the present disclosure;
Figure 5 illustrates the operation of a base station, a relay UE, and a remote UE in accordance with at least some of the embodiments described herein;
Figure 6 is a schematic block diagram of a radio access node according to some embodiments of the present disclosure;
Figure 7 is a schematic block diagram that illustrates a virtualized embodiment of the radio access node of Figure 6 according to some embodiments of the present disclosure;
Figure 8 is a schematic block diagram of the radio access node of Figure 6 according to some other embodiments of the present disclosure;
Figure 9 is a schematic block diagram of a UE according to some embodiments of the present disclosure;
Figure 10 is a schematic block diagram of the UE of Figure 9 according to some other embodiments of the present disclosure;
Figure 11 illustrates a telecommunication network connected via an intermediate network to a host computer in accordance with some embodiments of the present disclosure;
Figure 12 is a generalized block diagram of a host computer communicating via a base station with a UE over a partially wireless connection in accordance with some embodiments of the present disclosure;
Figure 13 is a flowchart illustrating a method implemented in a communication system in accordance with one embodiment of the present disclosure;
Figure 14 is a flowchart illustrating a method implemented in a communication system in accordance with one embodiment of the present disclosure;
Figure 15 is a flowchart illustrating a method implemented in a communication system in accordance with one embodiment of the present disclosure; and
Figure 16 is a flowchart illustrating a method implemented in a communication system in accordance with one embodiment of the present disclosure.

### Detailed Description

The embodiments set forth below represent information to enable those skilled in the art to practice the embodiments and illustrate the best mode of practicing the embodiments. Upon reading the following description in light of the accompanying drawing figures, those skilled in the art will understand the concepts of the disclosure and will recognize applications of these concepts not particularly addressed herein. It should be understood that these concepts and applications fall within the scope of the disclosure.

**Radio Node:** As used herein, a "radio node" is either a radio access node or a wireless communication device.

**Radio Access Node:** As used herein, a "radio access node" or "radio network node" or "radio access network node" is any node in a Radio Access Network (RAN) of a cellular communications network that operates to wirelessly transmit and/or receive signals. Some examples of a radio access node include, but are not limited to, a base station (e.g., a New Radio (NR) base station (gNB) in a Third Generation Partnership Project (3GPP) Fifth Generation (5G) NR network or an enhanced or evolved Node B (eNB) in a 3GPP Long Term Evolution (LTE) network), a high-power or macro base station, a low-power base station (e.g., a micro base station, a pico base station, a home eNB, or the like), a relay node, a network node that implements part of the functionality of a base station or a network node that implements a gNB Distributed Unit (gNB-DU)) or a network node that implements part of the functionality of some other type of radio access node.

**Core Network Node:** As used herein, a "core network node" is any type of node in a core network or any node that implements a core network function. Some examples of a core network node include, e.g., a Mobility Management Entity (MME), a Packet Data Network Gateway (P-GW), a Service Capability Exposure Function (SCEF), a Home Subscriber Server (HSS), or the like. Some other examples of a core network node include a node implementing an Access and Mobility Function (AMF), a User Plane Function (UPF), a Session Management Function (SMF), an Authentication Server Function (AUSF), a Network Slice Selection Function (NSSF), a Network Exposure Function (NEF), a Network Function (NF) Repository Function (NRF), a Policy Control Function (PCF), a Unified Data Management (UDM), or the like.

**Communication Device:** As used herein, a "communication device" is any type of device that has access to an access network. Some examples of a communication device include, but are not limited to: mobile phone, smart phone, sensor device, meter, vehicle, household appliance, medical appliance, media player, camera, or any type of consumer electronic, for instance, but not limited to, a television, radio, lighting arrangement, tablet computer, laptop, or Personal Computer (PC). The communication device may be a portable, hand-held, computer-comprised, or vehicle-mounted mobile device, enabled to communicate voice and/or data via a wireless or wireline connection.

**User Equipment (UE):** One type of communication device is a UE, which herein refers to any wireless communication device that has access to (i.e., is served by) a wireless network (e.g., a cellular network). Some examples of a wireless communication device include, but are not limited to: a 3GPP UE (i.e., a UE in a 3GPP network), a Machine Type Communication (MTC) device (also referred to herein as a MTC UE, and an Internet of Things (IoT) device (also referred to herein as an IoT UE). Such UEs may be, or may be integrated into, a mobile phone, smart phone, sensor device, meter, vehicle, household appliance, medical appliance, media player, camera, or any type of consumer electronic, for instance, but not limited to, a television, radio, lighting arrangement, tablet computer, laptop, or PC. The UE may be a portable, hand-held, computer-comprised, or vehicle-mounted mobile device, enabled to communicate voice and/or data via a wireless connection.

**Relay UE:** As used herein, a "relay UE" is a UE that, in addition to having communication to/from a RAN node (e.g., a base station), can also have communication to and from another UE, for example, via a D2D link or 3GPP sidelink. This other UE is referred to herein as a "remote UE". Furthermore, a relay UE can receive and transmit data and control signals on behalf of the remote UE(s) to which it has a direct communication link. The relay UE is in proximity of one or more remote UEs.

**Remote UE:** As used herein, a "remote UE" is a UE that is capable of both D2D or 3GPP sidelink communication to the relay UE and direct communication to a base station. Typically, the remote UE is power constrained. The remote UE operates in a deep-sleep mode of operation (e.g., 3GPP idle mode) and can be woken up by a wake-up signal. Sometimes in the present disclosure, the term "sensor UE" or "sensor node" is used to denote a type of remote UE that is extremely power constrained.

**Network Node:** As used herein, a "network node" is any node that is either part of the RAN or the core network of a cellular communications network/system.

Note that the description given herein focuses on a 3GPP cellular communications system and, as such, 3GPP terminology or terminology similar to 3GPP terminology is oftentimes used. However, the concepts disclosed herein are not limited to a 3GPP system.

**Low-Power Wake-Up Signal (LPWUS):** As used herein, a "LPWUS" is a special paging signal that is transmitted from a relay UE to one or more remote UEs to inform the one or more remote UEs to wake-up from a deep-sleep state (e.g., a 3GPP idle mode). The LPWUS has one or more characteristics (e.g., narrow bandwidth and/or simplified modulation and coding scheme) that enable a power cost for detecting the LPWUS at a remote UE to be less than a power cost for detecting a conventional WUS from a base station at the remote UE. The one or more characteristics of the LPWUS enable detection at the remote UE via a low power receiver, e.g. an envelope detector, comparator, and time-domain correlator.

Note that, in the description herein, reference may be made to the term "cell"; however, particularly with respect to 5G NR concepts, beams may be used instead of cells and, as such, it is important to note that the concepts described herein are equally applicable to both cells and beams.

As discussed above, there is a need for systems and methods providing an energy efficient yet robust solution to wake up UEs, such as ultra-low power UEs, and transfer data between those UEs and the base station. In United States Patent Application Publication No. 2020/0163017 A1 (hereinafter "the '017 Application"), the use of a relay UE to transmit a wake-up signal (WUS) to a remote UE (e.g., an IoT UE) is proposed. However, besides the WUS itself, there is a need to re-establish time synchronization between the IoT UE and the network when the IoT UE wakes up from deep sleep, and this demands further signal transmission/reception. This reestablishment of time synchronization is not addressed in the '017 Application.

Systems and methods are disclosed herein that address the aforementioned and/or other problems. Embodiments of the solution disclosed herein are based on relayed wake-up of a remote UE (e.g., an IoT UE such as, e.g., a sensor) via a relay UE and subsequent data transfer between the relay UE and remote UE. The rationale is that the distance between the relay UE (e.g., selected based on coverage) and the remote UE is much shorter than the distance between base station and the remote UE making such a system more robust and leading to lower power consumption in the remote UE.

By introducing a relay UE, embodiments of the solution disclosed herein enable ultra-low-power UEs to enter/exit deep sleep without having to communicate directly with the base station.

Whereas the basic idea of using a relay node to transmit a wake-up signal to an IoT UE is described in the '017 Application, there are multiple aspects of the embodiments disclosed herein, which are potentially independent, that all support a much more energy efficient and robust system:
- A first aspect relates to mechanisms and procedures for re-establishing time and frequency synchronization of the remote UEs after deep sleep by the support of the relay UE. In this regard, two time/frequency re-synchronization schemes (denoted herein as "TRS1" and "TRS2") to achieve various synchronization accuracy by a remote UE with the support of the relay UE are disclosed herein.
- A second aspect relates to co-design of time and frequency (time/frequency) synchronization signals and a Low-Power Wake-Up Signal (LPWUS) transmitted by a relay UE so that the remote UE can be more power efficient when performing time/frequency synchronization and LPWUS detection.
- A third aspect relates to optimizations in the signaling between the relay UE and the remote UE that, because of much shorter distances, are able to minimize power consumption at the remote UE. These optimizations may include, e.g., optimizations to a time offset between the synchronization signal and the LPWUS, optimizations to a bandwidth of the LPWUS and/or the synchronization signal, optimizations related to the type of modulation and coding used for the LPWUS (e.g., can be dynamically adapted to be more/less robust based on the distance between the relay UE and the remote UE), optimizations related to transmit power, etc.

Embodiments of the solutions disclosed herein may enable better coverage for UEs that are in deep sleep (i.e., low power) mode, may enable lower uplink transmit power from remote UEs (e.g., IoT UEs) for wake-up sequences and communication, and/or may allow for a simpler and lower power wake-up receiver mode within remote UEs.

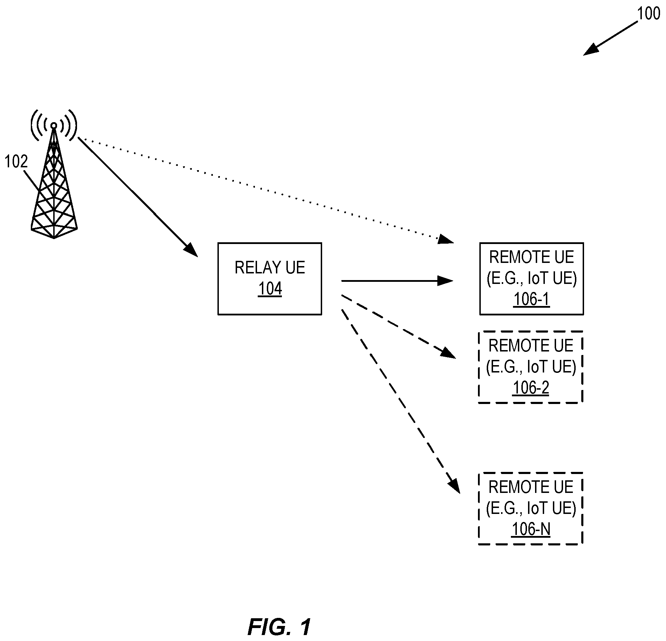

In this regard, Figure 1 illustrates a system 100 in which embodiments of the present disclosure may be implemented. As illustrated, the system 100 includes a base station 102 and a relay UE 104 that operates as proxy between the base station 102 and one or more remote UEs 106-1 to 106-N, which are generally referred to herein collectively as remote UEs 106 and individually as a remote UE 106. The remote UEs 106 may be, for example ultra-low power IoT UEs. The remote UEs 106 operate in a deep sleep mode of operation (e.g., an idle mode) until woken up by a WUS or Low-Power WUS (LPWUS). In addition, the remote UEs 106 could be in a non-coverage region (i.e., they may have very poor Radio Frequency (RF) link to the base station 102 such that no or limited radio signal from the base station 102 can be received by the remote UEs 106 in the non-coverage region). A non-coverage region may also be referred to as a shadow region.

The base station 102 is aware, e.g., due to the authentication procedures, of remote UEs 106 in an area. The base station 102 can further identify a UE (or multiple UEs) in the vicinity of the remote UEs 106 as the relay UE 104 for these remote UEs 106. For example, the base station 102 may estimate the locations of the UEs under its coverage and select UEs close to the remote UEs 106 as relay candidates. Furthermore, based on received measurement reports from UEs, the base station 102 builds an understanding of coverage/signal strength, transmit power of UEs, mobility of the UEs, etc. and then determines both the remote UEs 106 and the relay UE 104 for those remote UEs 106. Thereafter, the base station 102 notifies both the relay UE 104 and the remote UEs 106 of the pairing. For example, the base station 102 may share UE IDs of the remote UEs 106 with the relay UE 104 and/or inform the remote UEs 106 of a relay ID of the relay UE 104. Once a pairing acknowledgement is received by the base station 102 from each individual remote UE 106 directly (or in some embodiments via the relay UE 104 on behalf of the individual remote UEs 106), the base station 102 notifies the remote UEs 106 directly (or in some embodiments via the relay UE 104), that they can go into a deep sleep mode and, upon reception of a wake-up signal, need to communicate with the relay UE 104 or communicate directly with the base station 102.

When the base station 102 desires to wake-up and fetch data from a remote UE 106 (or a group of remote UEs 106), the base station 102 transmits a WUS which includes identifier (ID) of that remote UE 106 (or that group of remote UEs 106). As described below in detail, the relay UE 104 operates to receive and decode the WUS on behalf of the remote UE 106 (or group of remote UEs 106). The relay UE 104 then generates and transmits a LPWUS so that the remote UE 106 (or group of remote UEs 106) for which the WUS from the base station 102 is intended is(are) woken-up. In one embodiment, the LPWUS is encoded with the ID of the remote UE 106 (or the ID of the group of remote UE(s)) to be woken-up.

As the distance between the relay UE 104 and the remote UEs 106 is much shorter than the distance between base station 102 and the remote UEs 106, the LPWUS transmitted from the relay UE 104 to the remote UEs 106 can be much simplified, as compared to the WUS transmitted by the base station 102, by using a simple radio waveform (for example, by being coded with On-Off Keying (OOK)) so that the power cost to detect the LPWUS by the remote UEs 106 can be much less than that to detect the WUS from the base station 102. For example, an Orthogonal Frequency Division Multiplexing (OFDM) transmitter can be used to generate the LPWUS as an OOK pulse. One example of a OOK wakeup signal and corresponding low-power receiver is described in J. Moody et al., "A -76dBm 7.4nW Wakeup Radio With Automatic Offset Compensation", ISSCC 2018. Upon detecting the LPWUS, the remote UE 106 sends a LPWUS acknowledgement (ACK) only to the relay node 104 and not to the base station 102 which initiated the wake up signaling, which enables reducing the RF transmission power of the LPWUS ACK as compared to that which would be needed to transmit a WUS ACK to the base station 102.

In addition to the LPWUS, embodiments are disclosed herein to establish time and frequency re-synchronization for the remote UEs 106 in association with LPWUS detection. Embodiments disclosed herein optimize the time/frequency synchronization together with LPWUS detection for the sake of UE power saving.

Embodiments of the present disclosure consider one or more of the following aspects for the relay UE 104 to configure the synchronization signals together with the LPWUS:
- waveform and bandwidth of the synchronization signals, e.g. OFDM multiple carrier signal or single carrier signal can be exploited as the synchronization signals,
- coding scheme of the synchronization signals, e.g. the ID of the relay UE 104 can be encoded and carried by the synchronization signals,
- time offset between the synchronization signal and the LPWUS, and
- number of instances of synchronization signals.

Below are two example approaches for re-establishing time and frequency synchronization to achieve various levels of accuracy in the remote UE 106:
- Time/Frequency Re-Synchronization scheme 1 (TRS1): The relay UE 104, which is time/frequency synchronized with the network (e.g., with the base station 102), transmits a synchronization signal followed by a LPWUS. The remote UE 106 detects the synchronization signal and performs time/frequency re-synchronization (e.g., with the relay UE 104) based on the detected synchronization signal. The synchronization signal may occupy a certain amount of frequency bandwidth and/or contain multiple instances so that the time/frequency synchronization in the remote UE 106 can achieve an accuracy level which enable the remote UE 106 to communication directly with the base station 102 after waking-up upon detecting the LPWUS.
- Time/Frequency Re-Synchronization scheme 2 (TRS2): The relay UE 104, which is time-synchronized with the network (e.g., with the base station 102), transmits a simpler synchronization signal (e.g., a single carrier synchronization signal) followed by a LPWUS. A relaxed time synchronization is established between the remote UE 106 and the relay UE 104 so that the remote UE 106 is able to communication directly with the relay UE 104 after waking up upon detecting the LPWUS. This scheme can lead to further optimizations when there is only a limited amount of data to be transferred.

To reduce the amount of power consumed by the remote UE 106 to perform time/frequency synchronization and LPWUS detection, a time offset between the synchronization signal and the LPWUS can be optimized so that the remote UE 106 can keep its active duration as short as possible while detecting both the synchronization signal and the LPWUS. Thus, in one embodiment, the LPWUS immediately follows the synchronization signal (i.e., the LPWUS starts in the OFDM that immediately follows an OFDM symbol in which the synchronization signal, or one of multiple instances of the synchronization signal, is transmitted).

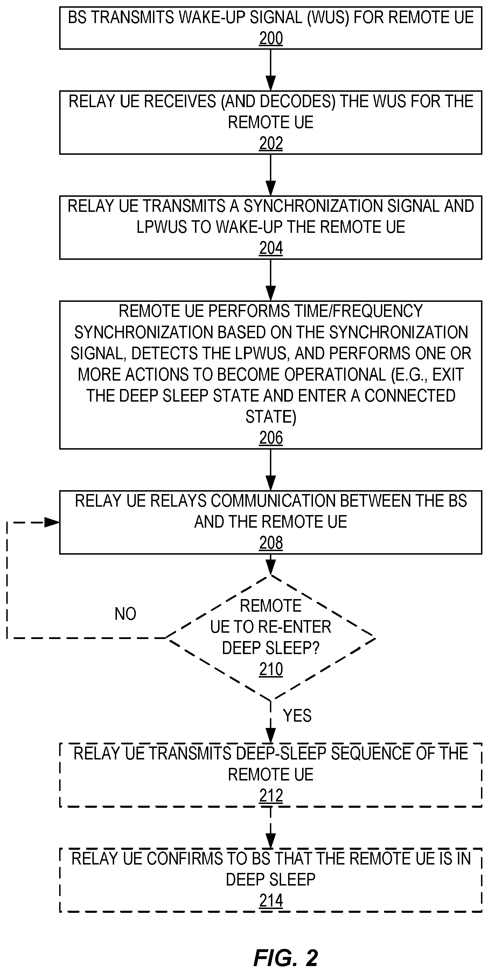

Figure 2 is a flow chart that illustrates the operation of the base station 102, the relay UE 104, and the remote UE 106 in accordance with one embodiment of the present disclosure. Optional steps are denoted by dashed boxes/lines. As illustrated, in this embodiment, the base station 102 transmits a WUS containing the UE ID of the remote UE 106 (step 200). The relay UE 104 receives and decodes the WUS for the remote UE 106 (step 202). In other words, the relay UE 104 receives the WUS and decodes the WUS to determine that the WUS includes the UE ID of the remote UE 106. The relay UE 104 then generates and transmits a synchronization signal followed by a LPWUS to the remote UE 106 (step 204). More specifically, in one embodiment, the relay UE 104 transmits a synchronization signal. In addition, the relay UE 104 generates a LPWUS with a sequence based on the UE ID of the remote UE 106 and transmits the LPWUS following the synchronization signal. In one embodiment, the relay UE 104 transmits a single instance of the synchronization signal, and the LPWUS follows (e.g., immediately follows, e.g., in a next OFDM symbol) the single instance of the synchronization signal. In another embodiment, the relay UE 104 transmits multiple instances, or repetitions, of the synchronization signal, and the LPWUS follows (e.g., immediately follows, e.g., in a next OFDM symbol) one of the instances of the synchronization signal (e.g., immediately follows an k-th instance of the synchronization signal where N instances of the synchronization signal are transmitted and 1 ≤ *k* ≤ *N*)*.* Note that the LPWUS may be broadcast to all of the remote UEs 106 or may be unicast to the remote UE 106 for which it is intended via a respective D2D or 3GPP sidelink.

At the remote UE 106, the remote UE 106 performs time/frequency synchronization based on the synchronization signal and detects (e.g., receives and decodes) the LPWUS (step 206). In one embodiment, the LPWUS is encoded with the UE ID of the remote UE 106 and, as such, detection of the LPWUS includes determining that the UE ID with which the LPWUS is encoded matches the UE ID of the remote UE 106. Upon detecting the LPWUS (and determining that the encoded UE ID matches its own UE ID), the remote UE 106 performs one or more actions, e.g., to become operational (e.g., exists the deep-sleep mode and enters a connected mode) (step 206).

Once the remote UE 106 is operational, the remote UE 106 receives data from and/or transmits data to the relay UE 104 via a respective sidelink (step 208). Note that for uplink data transmission, once the relay UE 104 receives data from the remote UE 106, the relay UE 104 transmits the data to the base station 102. Likewise, for downlink data transmission, once the relay UE 104 receives data for the remote UE 106 from the base station 102, the relay UE 104 transmits the data to the remote UE 106 via the sidelink.

The relay node 104 may thereafter determine whether the remote UE 106 is to return to the deep-sleep mode (step 210). If so, in one embodiment, the relay UE 104 transmits a deep-sleep sequence of the remote UE 106 (step 212). The relay UE 104 may confirm to the base station 102 (e.g., upon receiving a deep-sleep ACK from the remote UE 106) that the remote UE 106 is in the deep-sleep state (step 214).

Now, some further description of aspects of the present disclosures related to time/frequency synchronization will be provided. In 3GPP LTE, a base station always broadcasts a Cell Reference Signal (CRS) which can be used by UE (e.g., a remote UE) to perform time/frequency synchronization. 3GPP NR does not specify this always-on broadcast signal from the NR base station (i.e., gNB), instead there are dedicated Synchronization Signal Blocks (SSBs) periodically broadcasted from a NR BS. By detecting SSB, a NR UE can perform time/frequency synchronization to the NR BS.

Assuming the relay UE 104 is always time/frequency synchronized with the network (e.g., with the base station 102), in one embodiment, a dedicated synchronization signal followed by the LPWUS may be transmitted/broadcast by the relay UE 104 (e.g., in step 204). By receiving the synchronization signal, the remote UE 106 (or a group of remote UEs 106) can perform frequency/time synchronization with the relay UE 104 so that it (or they) can correctly receive/decode the LPWUS following the synchronization signal.

Two example schemes for time/frequency re-synchronization, denoted herein as TRS1 and TRS2, are as follows.

**TRS1:** When the remote UE 106 is supposed to connect to the base station 102 after waking up, the relay UE 104 may configure its synchronization signal to the remote UE(s) 106 in the time and/or frequency domain and/or samples with better Signal to Noise Ratio (SNR) (e.g., via using more complex modulation and coding scheme). In one embodiment, in this case, the relay UE 104 may configure its synchronization signal to the remote UE(s) 106 with a more complex sequence occupying more RF resources in time and/or frequency domain (e.g. the synchronization signal transmitted by the relay UE 104 may be the sidelink synchronization signal specified in 3GPP LTE/NR) in order to guarantee high accuracy of time/frequency synchronization between the remote UE and the relay UE 104 and thus the base station 102. In other words, the amount of time and/or frequency domain resources occupied by the synchronization signal transmitted by the relay UE 104 (or the multiple instances of the synchronization signal transmitted by the relay UE 104) may be a function of whether the remote UE 106 is to communicate directly with the base station 102 after wake-up or is to communicate with the relay UE 104 (i.e., communicate with the base station 102 via the relay UE 104) after wake-up. For the former, more time and/or frequency resources are used in order to provide a sufficient level of time/frequency synchronization accuracy.

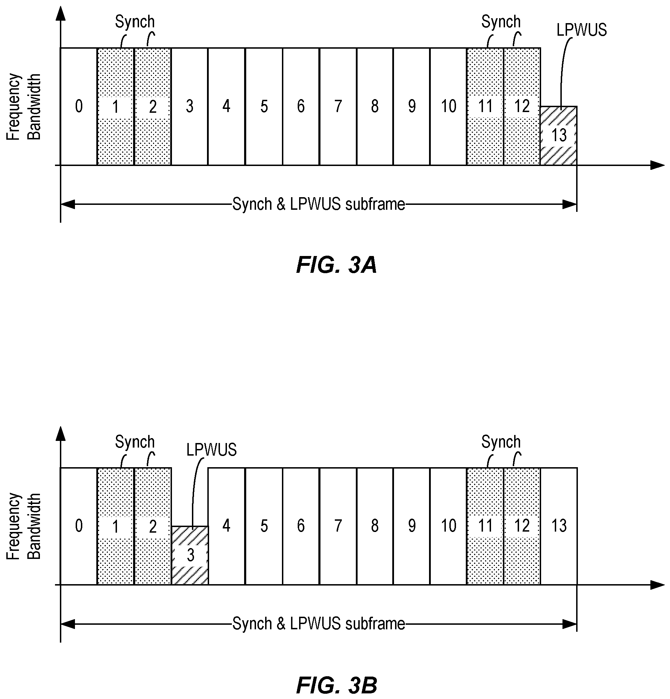

Figure 3A shows an example of an LTE sidelink synchronization subframe including four synchronization symbols (symbols 1, 2, 11, and 12). In other words, the synchronization signal (or instances of the synchronization signal) are transmitted in symbols 1, 2, 11, and 12 in the example of Figure 3A. These four synchronization symbols may be encoded by the ID of the relay UE 104. The subframe is transmitted by the relay UE 104. To wake up remote UEs 106 by the relay UE 104, in this example, symbol 13 is allocated for transmission of the LPWUS transmission (i.e., the LPWUS is transmitted in symbol 13 in this example). As shown in Figure 3A, the four synchronization symbols may be allocated with higher bandwidth than the LPWUS. In other words, the synchronization signal may use a bandwidth that is greater than the bandwidth used for LPWUS.

Note that, in one alternative example, the LPWUS is transmitted in symbol 3 immediately following the second synchronization symbol (e.g., immediately following a second instance, or repetition, of the synchronization signal in symbol 2), as illustrated in Figure 3B. This is to illustrate that, for example, the LPWUS need not necessarily follow the last instance of the synchronization signal (e.g., in a subframe), but may instead follow some prior instance of the synchronization signal (e.g., in the subframe). When the LPWUS is allocated between synchronization signals or between instances, or repetitions, of the synchronization signal (e.g., in symbol 3 as in Figure 3B), the remote UE 106 may receive symbol 1 and 2 first, so that the remote UE 106 can be synchronized to the relay UE 104 and receive the following LPWUS. If the remote UE 106 finds the LPWUS is targeting the remote UE 106, it may then perform further time/frequency synchronization by receiving the synchronization signal instances, or repetitions, in additional symbols 11 and 12. Otherwise, it can skip the reception of the additional synchronization symbols.

To further optimize the power consumption of the remote UE 106, when the D2D SNR is high enough (e.g., above a predefined SNR threshold), the remote UE 106 may only receive a partial bandwidth of the synchronization signals. For example, the remote UE 106 may receive the synchronization signal (e.g., in symbols 1 and 2 of the examples of Figures 3A and 3B) with the same bandwidth as the LPWUS reception. The remote UE 106 can still be synchronized and receive the following LPWUS. If the remote UE 106 finds the LPWUS is targeting the remote UE 106, it may then further time/frequency synchronization by receiving the synchronization signal in symbols 11 and 12 with full bandwidth, and wakeup its main receiver. Otherwise, it can skip the reception of the additional synchronization symbols.

In one embodiment, the relay UE 104 may transmit additional synchronization signal(s) with a time offset to the LPWUS where the time offset is configured according to the duration of the wakeup process of the remote UE 106. When the remote UE 106 completes its wakeup process (which is triggered by the LPWUS), it can receive the synchronization signals and perform time/frequency synchronization. As multiple symbols with high bandwidth can be used for the synchronization signal, high synchronization accuracy can be achieved between the remote UE 106 and the relay UE 104 (and also the base station 102). For example, after being woken-up by the LPWUS, the remote UE 106 can start a random access to set up radio connection with the base station 102.

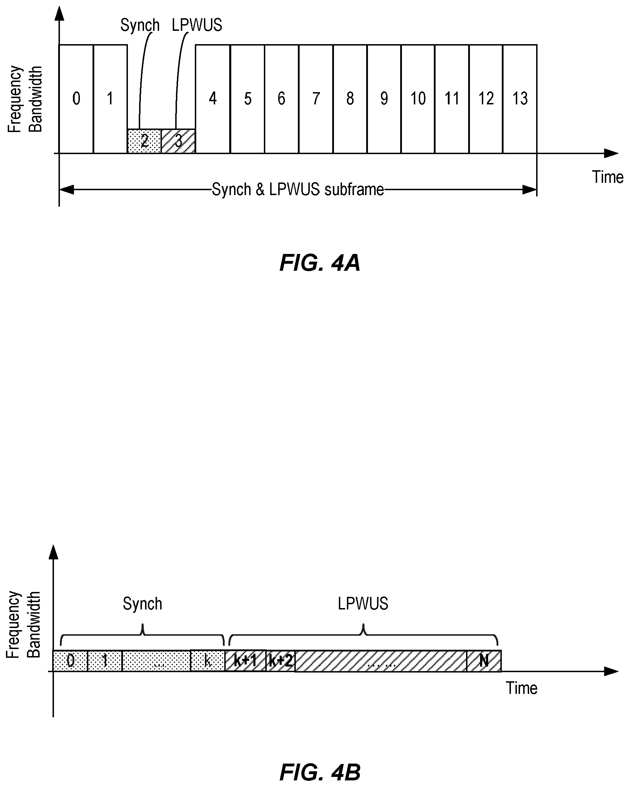

**TRS2:** When the remote UE 106 is not supposed to connect to the base station 102 after waking up, the relay UE 104 may configure its synchronization signal to the remote UE 106 with a simpler sequence occupying less RF resources in the time and/or frequency domain. As example is shown in Figure 4A where the synchronization signal is transmitted is symbol 2 in a reduced bandwidth, and the LPWUS is transmitted in symbol 3 also in a reduced bandwidth. Using this simpler sequence, a relaxed time synchronization is established between the remote UE 106 and the relay UE 104 serving the needs for their sidelink communication. This scheme can be further optimized when there is only a limited amount of data to be transferred, and the relay UE 104 can act as a proxy for such data transfer and service requests. For example, when a simple modulation scheme (e.g., OOK) is applied to transfer small amount of data between the relay UE 104 and the remote UE 106, the sidelink can tolerate higher time/frequency synchronization errors (compared with TRS1) so the synchronization signal can be simplified, e.g., a single-tone signal can be used. Another example is illustrated in Figure 4B. In this example, OOK modulation may be used where the synchronization signal and the LPWUS can be longer than 1 OFDM symbol.

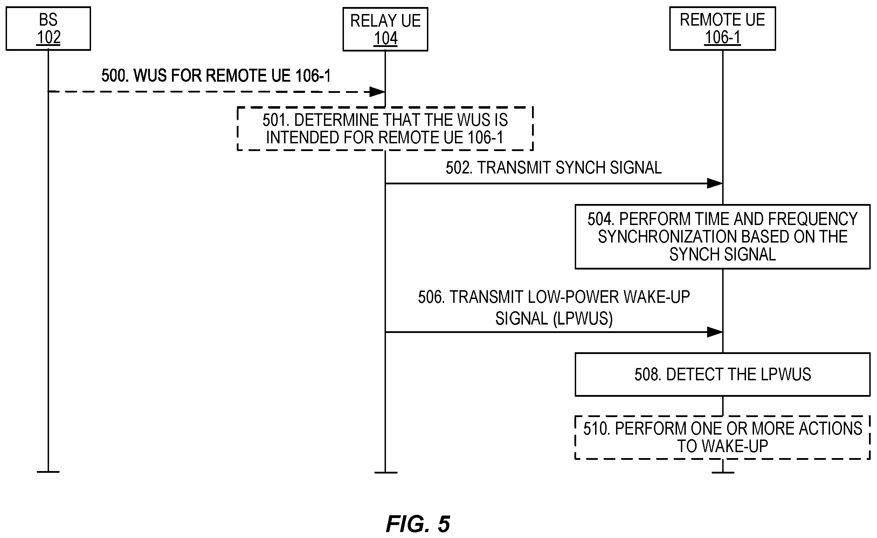

Figure 5 illustrates the operation of the base station 102, the relay UE 104, and the remote UE 106-1 (in this example), in accordance with at least some of the embodiments described above. Optional steps are denoted with dashed lines/boxes. As illustrated, the base station 102 transmits a WUS that includes, is encoded with, or otherwise indicates the remote UE 106-1 (step 500). The relay UE 104 receives the WUS and determines that the WUS is intended for the remote UE 106-1 (step 501). The relay UE 104 transmits a synchronization signal (step 502). The remote UE 106-1 performs time/frequency synchronization based on the synchronization signal (step 504). The relay UE 104 also generates and transmits a LPWUS to the remote UE 106-1 (step 506). Note that the synchronization signal and the LPWUS may be in accordance with any of the embodiments described above. The relay UE 106-1 detects (i.e., receives and decodes) the LPWUS (step 508). Responsive to detecting the LPWUS, the remote UE 106-1 performs one or more actions to wake-up (step 510).

In one embodiment, the LPWUS has a bandwidth that is less than that of a WUS (e.g., the WUS of step 500) from the base station 102. In one embodiment, the LPWUS has a bandwidth that is less than 180 kilohertz (kHz). In one embodiment, the LPWUS is transmitted in at least one OFDM symbol. In one embodiment, the synchronization signal and the LPWUS are transmitted in a same subframe. In one embodiment, transmitting the synchronization signal in step 502 includes transmitting two or more instances, or repetitions, of the synchronization signal. The repetitions may be transmitted in the time domain and/or the frequency domain. In one embodiment, at least one repetitions of the synchronization signal is transmitted prior to the LPWUS. In one embodiment, all of the repetitions of the synchronization signal (e.g., in a subframe) are transmitted prior to the LPWUS (e.g., in the same subframe). In one embodiment, the two or more repetitions of the synchronization signal and the LPWUS are transmitted in a same subframe.

In one embodiment, a bandwidth of the synchronization signal is greater than a bandwidth of the LPWUS. In one embodiment, the bandwidth of the synchronization signal is less than or equal to a full receive bandwidth of the remote UE 106-1. In one embodiment, the remote UE 106-1 is an IoT UE. In one embodiment, the full receive bandwidth of the remote UE 106-1 is either 1.4 Megahertz (MHz) or 180 kHz.

In one embodiment, a single instance of the synchronization signal is transmitted. In one embodiment, this single instance of the synchronization signal is transmitted in at least one OFDM symbol that immediately precedes the LPWUS. In one embodiment, a bandwidth of the synchronization signal is less than a full receive bandwidth of the remote UE 106-1. In one embodiment, the remote UE 106-1 is an IoT UE. In one embodiment, the full receive bandwidth of the remote UE 106-1 is either 1.4 MHz or 180 kHz.

In one embodiment, a bandwidth of the synchronization signal is the same as a bandwidth of the LPWUS.

In one embodiment, at least one instance of the synchronization signal is transmitted in at least one OFDM symbol that immediately precedes an OFDM symbol in which the LPWUS is transmitted.

In one embodiment, either or both of a bandwidth of the synchronization signal and a bandwidth of the LPWUS is a function of one or more metrics related to one or more characteristics of a wireless channel between the relay UE 104 and the remote UE 106-1.

In one embodiment, either or both of a modulation or coding of the synchronization signal and a modulation or coding of the LPWUS is a function of one or more metrics related to one or more characteristics of a wireless channel between the relay UE 104 and the remote UE 106-1. In one embodiment, a transmit power used for transmitting the synchronization signal or the LPWUS is a function of the modulation or coding of the synchronization signal or the LPWUS, respectively.

In one embodiment, the LPWUS is encoded with an ID of the remote UE 106-1 or an ID of a group of the remote UEs 106.

In one embodiment, the relay UE 104 unicasts the synchronization signal and/or the LPWUS to the remote UE 106-1. In another embodiment, the relay UE 104 broadcasts the synchronization signal and/or the LPWUS to multiple remote UEs 106 including the remote UE 106-1.

It should be noted that while the embodiments described herein focus on the LPWUS, the embodiments can be extended to additionally or alternatively apply to a Go-To-Sleep (GTS) signal which is transmitted by the base station 102 and a Low-Power GTS (LPGTS) signal transmitted from the relay UE 104 to the remote UE 106-1 to cause the remote UE 106-1 to enter the deep-sleep state.

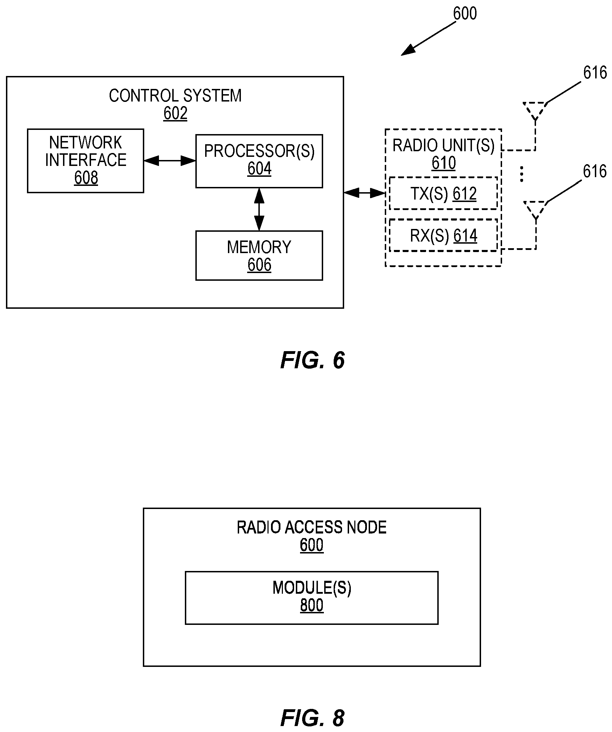

Figure 6 is a schematic block diagram of a radio access node 600 according to some embodiments of the present disclosure. Optional features are represented by dashed boxes. The radio access node 600 may be, for example, the base station 102 or a network node that implements all or part of the functionality of the base station 102 described herein. As illustrated, the radio access node 600 includes a control system 602 that includes one or more processors 604 (e.g., Central Processing Units (CPUs), Application Specific Integrated Circuits (ASICs), Field Programmable Gate Arrays (FPGAs), and/or the like), memory 606, and a network interface 608. The one or more processors 604 are also referred to herein as processing circuitry. In addition, the radio access node 600 may include one or more radio units 610 that each includes one or more transmitters 612 and one or more receivers 614 coupled to one or more antennas 616. The radio units 610 may be referred to or be part of radio interface circuitry. In some embodiments, the radio unit(s) 610 is external to the control system 602 and connected to the control system 602 via, e.g., a wired connection (e.g., an optical cable). However, in some other embodiments, the radio unit(s) 610 and potentially the antenna(s) 616 are integrated together with the control system 602. The one or more processors 604 operate to provide one or more functions of a radio access node 600 as described herein. In some embodiments, the function(s) are implemented in software that is stored, e.g., in the memory 606 and executed by the one or more processors 604.

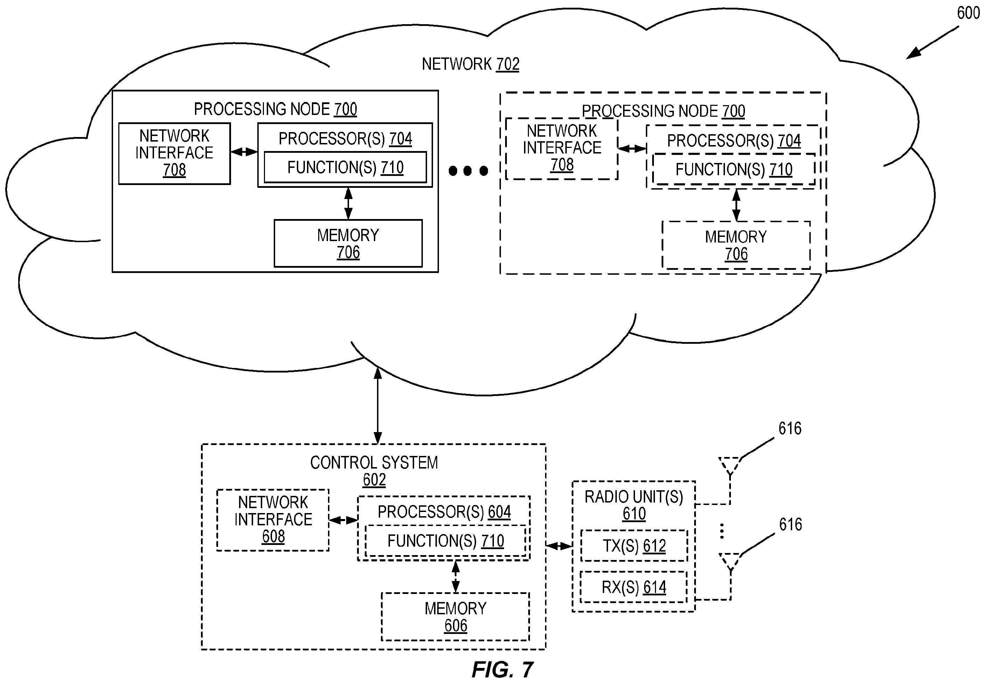

Figure 7 is a schematic block diagram that illustrates a virtualized embodiment of the radio access node 600 according to some embodiments of the present disclosure. This discussion is equally applicable to other types of network nodes. Further, other types of network nodes may have similar virtualized architectures. Again, optional features are represented by dashed boxes.

As used herein, a "virtualized" radio access node is an implementation of the radio access node 600 in which at least a portion of the functionality of the radio access node 600 is implemented as a virtual component(s) (e.g., via a virtual machine(s) executing on a physical processing node(s) in a network(s)). As illustrated, in this example, the radio access node 600 may include the control system 602 and/or the one or more radio units 610, as described above. The control system 602 may be connected to the radio unit(s) 610 via, for example, an optical cable or the like. The radio access node 600 includes one or more processing nodes 700 coupled to or included as part of a network(s) 702. If present, the control system 602 or the radio unit(s) are connected to the processing node(s) 700 via the network 702. Each processing node 700 includes one or more processors 704 (e.g., CPUs, ASICs, FPGAs, and/or the like), memory 706, and a network interface 708.

In this example, functions 710 of the radio access node 600 described herein are implemented at the one or more processing nodes 700 or distributed across the one or more processing nodes 700 and the control system 602 and/or the radio unit(s) 610 in any desired manner. In some particular embodiments, some or all of the functions 710 of the radio access node 600 described herein are implemented as virtual components executed by one or more virtual machines implemented in a virtual environment(s) hosted by the processing node(s) 700. As will be appreciated by one of ordinary skill in the art, additional signaling or communication between the processing node(s) 700 and the control system 602 is used in order to carry out at least some of the desired functions 710. Notably, in some embodiments, the control system 602 may not be included, in which case the radio unit(s) 610 communicate directly with the processing node(s) 700 via an appropriate network interface(s).

In some embodiments, a computer program including instructions which, when executed by at least one processor, causes the at least one processor to carry out the functionality of radio access node 600 or a node (e.g., a processing node 700) implementing one or more of the functions 710 of the radio access node 600 in a virtual environment according to any of the embodiments described herein is provided. In some embodiments, a carrier comprising the aforementioned computer program product is provided. The carrier is one of an electronic signal, an optical signal, a radio signal, or a computer readable storage medium (e.g., a non-transitory computer readable medium such as memory).

Figure 8 is a schematic block diagram of the radio access node 600 according to some other embodiments of the present disclosure. The radio access node 600 includes one or more modules 800, each of which is implemented in software. The module(s) 800 provide the functionality of the radio access node 600 described herein. This discussion is equally applicable to the processing node 700 of Figure 7 where the modules 800 may be implemented at one of the processing nodes 700 or distributed across multiple processing nodes 700 and/or distributed across the processing node(s) 700 and the control system 602.

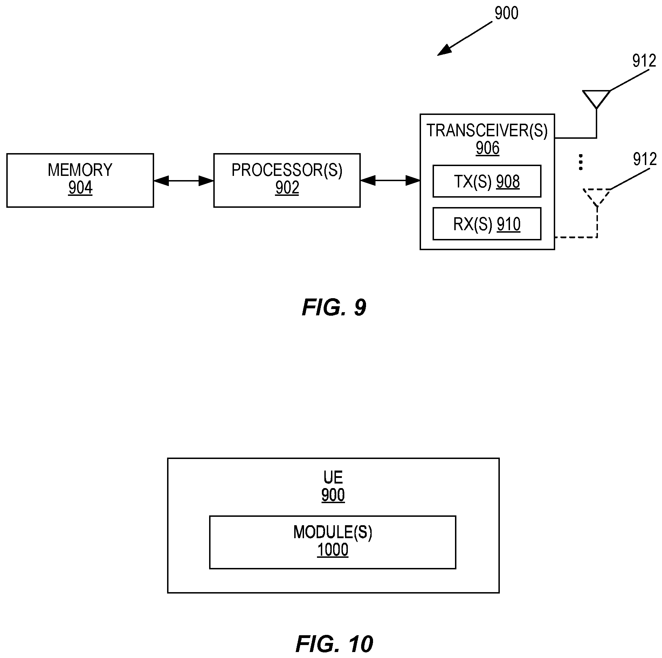

Figure 9 is a schematic block diagram of a UE 900 according to some embodiments of the present disclosure. The UE 900 may be the relay UE 104 or the remote UE 106. As illustrated, the UE 900 includes one or more processors 902 (e.g., CPUs, ASICs, FPGAs, and/or the like), memory 904, and one or more transceivers 906 each including one or more transmitters 908 and one or more receivers 910 coupled to one or more antennas 912. The transceiver(s) 906 includes radio-front end circuitry connected to the antenna(s) 912 that is configured to condition signals communicated between the antenna(s) 912 and the processor(s) 902, as will be appreciated by on of ordinary skill in the art. The processors 902 are also referred to herein as processing circuitry. The transceivers 906 are also referred to herein as radio circuitry. In some embodiments, the functionality of the UE 900 described above may be fully or partially implemented in software that is, e.g., stored in the memory 904 and executed by the processor(s) 902. Note that the UE 900 may include additional components not illustrated in Figure 9 such as, e.g., one or more user interface components (e.g., an input/output interface including a display, buttons, a touch screen, a microphone, a speaker(s), and/or the like and/or any other components for allowing input of information into the UE 900 and/or allowing output of information from the UE 900), a power supply (e.g., a battery and associated power circuitry), etc.

In some embodiments, a computer program including instructions which, when executed by at least one processor, causes the at least one processor to carry out the functionality of the UE 900 according to any of the embodiments described herein is provided. In some embodiments, a carrier comprising the aforementioned computer program product is provided. The carrier is one of an electronic signal, an optical signal, a radio signal, or a computer readable storage medium (e.g., a non-transitory computer readable medium such as memory).

Figure 10 is a schematic block diagram of the UE 900 according to some other embodiments of the present disclosure. The UE 900 includes one or more modules 1000, each of which is implemented in software. The module(s) 1000 provide the functionality of the UE 900 described herein.

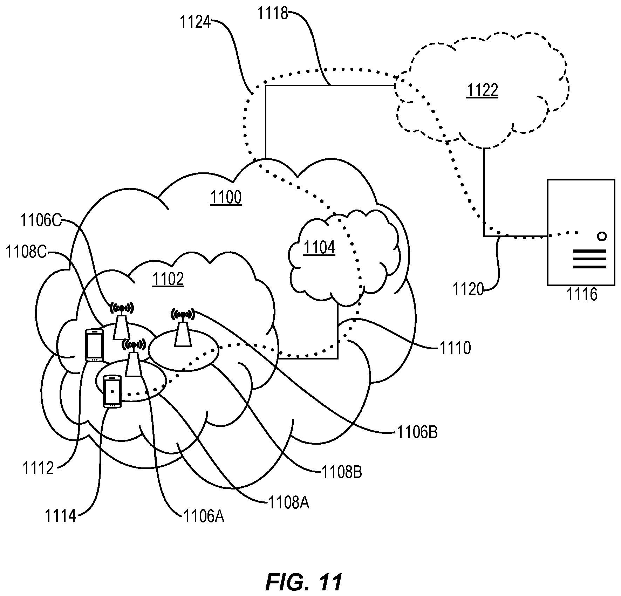

With reference to Figure 11, in accordance with an embodiment, a communication system includes a telecommunication network 1100, such as a 3GPP-type cellular network, which comprises an access network 1102, such as a RAN, and a core network 1104. The access network 1102 comprises a plurality of base stations 1106A, 1106B, 1106C, such as Node Bs, eNBs, gNBs, or other types of wireless Access Points (APs), each defining a corresponding coverage area 1108A, 1108B, 1108C. Each base station 1106A, 1106B, 1106C is connectable to the core network 1104 over a wired or wireless connection 1110. A first UE 1112 located in coverage area 1108C is configured to wirelessly connect to, or be paged by, the corresponding base station 1106C. A second UE 1114 in coverage area 1108A is wirelessly connectable to the corresponding base station 1106A. While a plurality of UEs 1112, 1114 are illustrated in this example, the disclosed embodiments are equally applicable to a situation where a sole UE is in the coverage area or where a sole UE is connecting to the corresponding base station 1106.

The telecommunication network 1100 is itself connected to a host computer 1116, which may be embodied in the hardware and/or software of a standalone server, a cloud-implemented server, a distributed server, or as processing resources in a server farm. The host computer 1116 may be under the ownership or control of a service provider, or may be operated by the service provider or on behalf of the service provider. Connections 1118 and 1120 between the telecommunication network 1100 and the host computer 1116 may extend directly from the core network 1104 to the host computer 1116 or may go via an optional intermediate network 1122. The intermediate network 1122 may be one of, or a combination of more than one of, a public, private, or hosted network; the intermediate network 1122, if any, may be a backbone network or the Internet; in particular, the intermediate network 1122 may comprise two or more sub-networks (not shown).

The communication system of Figure 11 as a whole enables connectivity between the connected UEs 1112, 1114 and the host computer 1116. The connectivity may be described as an Over-the-Top (OTT) connection 1124. The host computer 1116 and the connected UEs 1112, 1114 are configured to communicate data and/or signaling via the OTT connection 1124, using the access network 1102, the core network 1104, any intermediate network 1122, and possible further infrastructure (not shown) as intermediaries. The OTT connection 1124 may be transparent in the sense that the participating communication devices through which the OTT connection 1124 passes are unaware of routing of uplink and downlink communications. For example, the base station 1106 may not or need not be informed about the past routing of an incoming downlink communication with data originating from the host computer 1116 to be forwarded (e.g., handed over) to a connected UE 1112. Similarly, the base station 1106 need not be aware of the future routing of an outgoing uplink communication originating from the UE 1112 towards the host computer 1116.

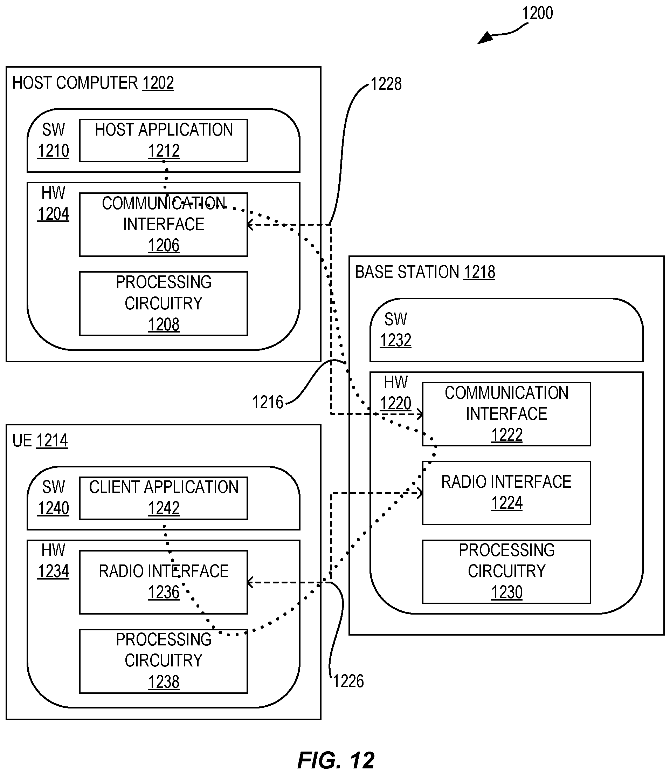

Example implementations, in accordance with an embodiment, of the UE, base station, and host computer discussed in the preceding paragraphs will now be described with reference to Figure 12. In a communication system 1200, a host computer 1202 comprises hardware 1204 including a communication interface 1206 configured to set up and maintain a wired or wireless connection with an interface of a different communication device of the communication system 1200. The host computer 1202 further comprises processing circuitry 1208, which may have storage and/or processing capabilities. In particular, the processing circuitry 1208 may comprise one or more programmable processors, ASICs, FPGAs, or combinations of these (not shown) adapted to execute instructions. The host computer 1202 further comprises software 1210, which is stored in or accessible by the host computer 1202 and executable by the processing circuitry 1208. The software 1210 includes a host application 1212. The host application 1212 may be operable to provide a service to a remote user, such as a UE 1214 connecting via an OTT connection 1216 terminating at the UE 1214 and the host computer 1202. In providing the service to the remote user, the host application 1212 may provide user data which is transmitted using the OTT connection 1216.

The communication system 1200 further includes a base station 1218 provided in a telecommunication system and comprising hardware 1220 enabling it to communicate with the host computer 1202 and with the UE 1214. The hardware 1220 may include a communication interface 1222 for setting up and maintaining a wired or wireless connection with an interface of a different communication device of the communication system 1200, as well as a radio interface 1224 for setting up and maintaining at least a wireless connection 1226 with the UE 1214 located in a coverage area (not shown in Figure 12) served by the base station 1218. The communication interface 1222 may be configured to facilitate a connection 1228 to the host computer 1202. The connection 1228 may be direct or it may pass through a core network (not shown in Figure 12) of the telecommunication system and/or through one or more intermediate networks outside the telecommunication system. In the embodiment shown, the hardware 1220 of the base station 1218 further includes processing circuitry 1230, which may comprise one or more programmable processors, ASICs, FPGAs, or combinations of these (not shown) adapted to execute instructions. The base station 1218 further has software 1232 stored internally or accessible via an external connection.

The communication system 1200 further includes the UE 1214 already referred to. The UE's 1214 hardware 1234 may include a radio interface 1236 configured to set up and maintain a wireless connection 1226 with a base station serving a coverage area in which the UE 1214 is currently located. The hardware 1234 of the UE 1214 further includes processing circuitry 1238, which may comprise one or more programmable processors, ASICs, FPGAs, or combinations of these (not shown) adapted to execute instructions. The UE 1214 further comprises software 1240, which is stored in or accessible by the UE 1214 and executable by the processing circuitry 1238. The software 1240 includes a client application 1242. The client application 1242 may be operable to provide a service to a human or non-human user via the UE 1214, with the support of the host computer 1202. In the host computer 1202, the executing host application 1212 may communicate with the executing client application 1242 via the OTT connection 1216 terminating at the UE 1214 and the host computer 1202. In providing the service to the user, the client application 1242 may receive request data from the host application 1212 and provide user data in response to the request data. The OTT connection 1216 may transfer both the request data and the user data. The client application 1242 may interact with the user to generate the user data that it provides.

It is noted that the host computer 1202, the base station 1218, and the UE 1214 illustrated in Figure 12 may be similar or identical to the host computer 1116, one of the base stations 1106A, 1106B, 1106C, and one of the UEs 1112, 1114 of Figure 11, respectively. This is to say, the inner workings of these entities may be as shown in Figure 12 and independently, the surrounding network topology may be that of Figure 11.

In Figure 12, the OTT connection 1216 has been drawn abstractly to illustrate the communication between the host computer 1202 and the UE 1214 via the base station 1218 without explicit reference to any intermediary devices and the precise routing of messages via these devices. The network infrastructure may determine the routing, which may be configured to hide from the UE 1214 or from the service provider operating the host computer 1202, or both. While the OTT connection 1216 is active, the network infrastructure may further take decisions by which it dynamically changes the routing (e.g., on the basis of load balancing consideration or reconfiguration of the network).

The wireless connection 1226 between the UE 1214 and the base station 1218 is in accordance with the teachings of the embodiments described throughout this disclosure. One or more of the various embodiments improve the performance of OTT services provided to the UE 1214 using the OTT connection 1216, in which the wireless connection 1226 forms the last segment.

A measurement procedure may be provided for the purpose of monitoring data rate, latency, and other factors on which the one or more embodiments improve. There may further be an optional network functionality for reconfiguring the OTT connection 1216 between the host computer 1202 and the UE 1214, in response to variations in the measurement results. The measurement procedure and/or the network functionality for reconfiguring the OTT connection 1216 may be implemented in the software 1210 and the hardware 1204 of the host computer 1202 or in the software 1240 and the hardware 1234 of the UE 1214, or both. In some embodiments, sensors (not shown) may be deployed in or in association with communication devices through which the OTT connection 1216 passes; the sensors may participate in the measurement procedure by supplying values of the monitored quantities exemplified above, or supplying values of other physical quantities from which the software 1210, 1240 may compute or estimate the monitored quantities. The reconfiguring of the OTT connection 1216 may include message format, retransmission settings, preferred routing, etc.; the reconfiguring need not affect the base station 1218, and it may be unknown or imperceptible to the base station 1218. Such procedures and functionalities may be known and practiced in the art. In certain embodiments, measurements may involve proprietary UE signaling facilitating the host computer's 1202 measurements of throughput, propagation times, latency, and the like. The measurements may be implemented in that the software 1210 and 1240 causes messages to be transmitted, in particular empty or 'dummy' messages, using the OTT connection 1216 while it monitors propagation times, errors, etc.

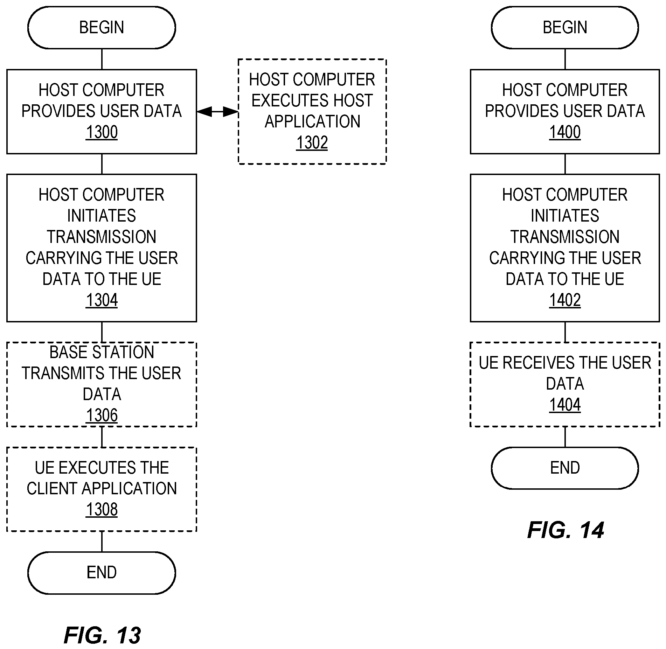

Figure 13 is a flowchart illustrating a method implemented in a communication system, in accordance with one embodiment. The communication system includes a host computer, a base station, and a UE which may be those described with reference to Figures 11 and 12. For simplicity of the present disclosure, only drawing references to Figure 13 will be included in this section. In step 1300, the host computer provides user data. In sub-step 1302 (which may be optional) of step 1300, the host computer provides the user data by executing a host application. In step 1304, the host computer initiates a transmission carrying the user data to the UE. In step 1306 (which may be optional), the base station transmits to the UE the user data which was carried in the transmission that the host computer initiated, in accordance with the teachings of the embodiments described throughout this disclosure. In step 1308 (which may also be optional), the UE executes a client application associated with the host application executed by the host computer.

Figure 14 is a flowchart illustrating a method implemented in a communication system, in accordance with one embodiment. The communication system includes a host computer, a base station, and a UE which may be those described with reference to Figures 11 and 12. For simplicity of the present disclosure, only drawing references to Figure 14 will be included in this section. In step 1400 of the method, the host computer provides user data. In an optional sub-step (not shown) the host computer provides the user data by executing a host application. In step 1402, the host computer initiates a transmission carrying the user data to the UE. The transmission may pass via the base station, in accordance with the teachings of the embodiments described throughout this disclosure. In step 1404 (which may be optional), the UE receives the user data carried in the transmission.

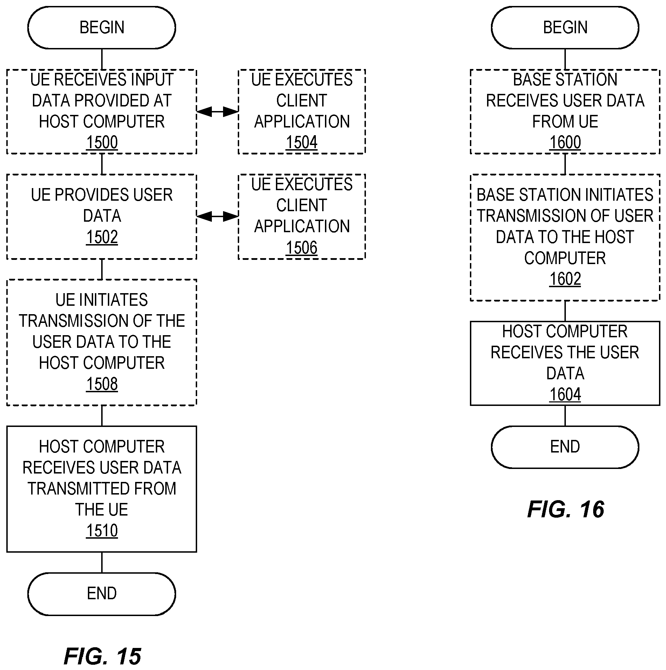

Figure 15 is a flowchart illustrating a method implemented in a communication system, in accordance with one embodiment. The communication system includes a host computer, a base station, and a UE which may be those described with reference to Figures 11 and 12. For simplicity of the present disclosure, only drawing references to Figure 15 will be included in this section. In step 1500 (which may be optional), the UE receives input data provided by the host computer. Additionally or alternatively, in step 1502, the UE provides user data. In sub-step 1504 (which may be optional) of step 1500, the UE provides the user data by executing a client application. In sub-step 1506 (which may be optional) of step 1502, the UE executes a client application which provides the user data in reaction to the received input data provided by the host computer. In providing the user data, the executed client application may further consider user input received from the user. Regardless of the specific manner in which the user data was provided, the UE initiates, in sub-step 1508 (which may be optional), transmission of the user data to the host computer. In step 1510 of the method, the host computer receives the user data transmitted from the UE, in accordance with the teachings of the embodiments described throughout this disclosure.

Figure 16 is a flowchart illustrating a method implemented in a communication system, in accordance with one embodiment. The communication system includes a host computer, a base station, and a UE which may be those described with reference to Figures 11 and 12. For simplicity of the present disclosure, only drawing references to Figure 16 will be included in this section. In step 1600 (which may be optional), in accordance with the teachings of the embodiments described throughout this disclosure, the base station receives user data from the UE. In step 1602 (which may be optional), the base station initiates transmission of the received user data to the host computer. In step 1604 (which may be optional), the host computer receives the user data carried in the transmission initiated by the base station.

Any appropriate steps, methods, features, functions, or benefits disclosed herein may be performed through one or more functional units or modules of one or more virtual apparatuses. Each virtual apparatus may comprise a number of these functional units. These functional units may be implemented via processing circuitry, which may include one or more microprocessor or microcontrollers, as well as other digital hardware, which may include Digital Signal Processors (DSPs), special-purpose digital logic, and the like. The processing circuitry may be configured to execute program code stored in memory, which may include one or several types of memory such as Read Only Memory (ROM), Random Access Memory (RAM), cache memory, flash memory devices, optical storage devices, etc. Program code stored in memory includes program instructions for executing one or more telecommunications and/or data communications protocols as well as instructions for carrying out one or more of the techniques described herein. In some implementations, the processing circuitry may be used to cause the respective functional unit to perform corresponding functions according one or more embodiments of the present disclosure.

While processes in the figures may show a particular order of operations performed by certain embodiments of the present disclosure, it should be understood that such order is exemplary (e.g., alternative embodiments may perform the operations in a different order, combine certain operations, overlap certain operations, etc.).

Those skilled in the art will recognize improvements and modifications to the embodiments of the present disclosure. All such improvements and modifications are considered within the scope of the concepts disclosed herein. The scope of the invention is defined in the appended claims.

## Claims

1. A method performed by a relay User Equipment, UE, (104) for a cellular communications system (100), the method comprising:
receiving (500) from a base station and decoding a wake-up signal, WUS, on behalf of a remote UE (106) or group of remote UEs (106-1 to 106-N);
transmitting (502) a synchronization signal for time and frequency synchronization of one or more of the remote UEs (106, 106-1 to 106-N); and
transmitting (506) a low-power wake-up signal, LPWUS, to a particular remote UE (106-1) that is in an idle mode, wherein the LPWUS has one or more characteristics that enable a power cost for detecting the LPWUS at the particular remote UE (106-1) to be less than a power cost for detecting the WUS from the base station at the particular remote UE (106-1).

2. The method of claim 1 wherein the LPWUS has a bandwidth that is less than that of a WUS from a base station.

3. The method of claim 1 wherein the LPWUS has a bandwidth that is less than 180 kilohertz, kHz.

4. The method of any of claims 1 to 3 wherein transmitting (506) the LPWUS comprises transmitting (506) the LPWUS in at least one Orthogonal Frequency Division Multiplexing, OFDM, symbol.

5. The method of any of claim 1 to 4 wherein the synchronization signal and the LPWUS are transmitted in a same subframe.

6. A relay User Equipment, UE, (104) for a cellular communications system (100), the relay UE (104) adapted to:
receive (500) and decode a wake-up signal, WUS, from a base station on behalf of a remote UE (106) or group of remote UEs (106-1 to 106-N);
transmit (502) a synchronization signal for time and frequency synchronization of one or more of the remote UEs (106, 106-1 to 106-N); and
transmit (506) a low-power wake-up signal, LPWUS, to a particular remote UE (106-1) that is in an idle mode, wherein the LPWUS has one or more characteristics that enable a power cost for detecting the LPWUS at the particular remote UE (106-1) to be less than a power cost for detecting the WUS from the base station at the particular remote UE (106-1).

7. The relay UE (104) of claim 6 further adapted to perform the method of any of claims 2 to 5.

8. A method performed by a remote User Equipment, UE, (106-1) for a cellular communications system (100), the method comprising:
while in an idle state:
receiving (502), from a relay UE (104), a synchronization signal for time and frequency synchronization of the remote UE (106-1);
performing (504) time and frequency synchronization based on the synchronization signal; and
detecting (508) a low-power wake-up signal, LPWUS, from the relay UE (104), wherein the LPWUS has one or more characteristics that enable a power cost for detecting the LPWUS at the remote UE (106-1) to be less than a power cost for detecting a wake-up signal, WUS, from a base station at the remote UE (106-1),
wherein the remote UE (106-1) is supported by the relay UE (104) for reception of the WUS from the base station.

9. The method of claim 8 wherein the LPWUS has a bandwidth that is less than that of a WUS from a base station.

10. The method of claim 8 wherein the LPWUS has a bandwidth that is less than 180 kilohertz, kHz.

11. The method of any of claims 8 to 10 wherein detecting (508) the LPWUS comprises detecting (508) the LPWUS in at least one Orthogonal Frequency Division Multiplexing, OFDM, symbol.

12. The method of any of claim 8 to 11 wherein the synchronization signal and the LPWUS are in a same subframe.

13. The method of any of claims 8 to 12 wherein receiving (502) the synchronization signal comprises receiving (502) at least one of two or more repetitions of the synchronization signal.

14. A remote User Equipment, UE, (106-1) for a cellular communications system (100), the remote UE (106-1) adapted to:
while in an idle state:
receive (502), from a relay UE (104), a synchronization signal for time and frequency synchronization of the remote UE (106-1);
perform (504) time and frequency synchronization based on the synchronization signal; and
detect (508) a low-power wake-up signal, LPWUS, from the relay UE (104), wherein the LPWUS has one or more characteristics that enable a power cost for detecting the LPWUS at the remote UE (106-1) to be less than a power cost for detecting a wake-up signal, WUS, from a base station at the remote UE (106-1),
wherein the remote UE (106-1) is supported by the relay UE (104) for reception of the WUS from the base station.

15. The remote UE (106-1) of claim 15 further adapted to perform the method of any of claims 9 to 14.

## Patentansprüche

1. Verfahren, das von einer Benutzereinrichtung, UE, für Relais (104) für ein zellulares Kommunikationssystem (100) durchgeführt wird, wobei das Verfahren umfasst:
Empfangen (500) eines Wake-up-Signals, WUS, von einer Basisstation und Dekodieren dieses im Namen einer entfernten UE (106) oder einer Gruppe entfernter UEs (106-1 bis 106-N);
Senden (502) eines Synchronisationssignals zur Zeit- und Frequenzsynchronisation einer oder mehrerer der entfernten UEs (106, 106-1 bis 106-N); und
Senden (506) eines Niedrigleistungs-Wake-up-Signals, LPWUS, an eine bestimmte entfernte UE (106-1), die sich in einem Leerlaufmodus befindet, wobei das LPWUS eine oder mehrere Eigenschaften aufweist, die ermöglichen, dass ein Leistungsaufwand zum Detektieren des LPWUS an der bestimmten entfernten UE (106-1) geringer als ein Leistungsaufwand zum Detektieren des WUS von der Basisstation an der bestimmten entfernten UE (106-1) ist.

2. Verfahren nach Anspruch 1, wobei das LPWUS eine Bandbreite aufweist, die geringer als diejenige eines WUS von einer Basisstation ist.

3. Verfahren nach Anspruch 1, wobei das LPWUS eine Bandbreite aufweist, die geringer als 180 Kilohertz, kHz, ist.

4. Verfahren nach einem der Ansprüche 1 bis 3, wobei das Senden (506) des LPWUS das Senden (506) des LPWUS in mindestens einem Orthogonal-Frequency-Division-Multiplexing-Symbol, OFDM-Symbol, umfasst.

5. Verfahren nach einem der Ansprüche 1 bis 4, wobei das Synchronisationssignal und das LPWUS in einem gleichen Subframe übertragen werden.

6. Benutzereinrichtung, UE, für Relais (104) für ein zellulares Kommunikationssystem (100), wobei die Relais-UE (104) dazu eingerichtet ist:
Empfangen (500) eines Wake-up-Signals, WUS, von einer Basisstation von einer Basisstation und Dekodieren dieses im Namen einer entfernten UE (106) oder einer Gruppe entfernter UEs (106-1 bis 106-N);
Senden (502) eines Synchronisationssignals zur Zeit- und Frequenzsynchronisation einer oder mehrerer der entfernten UEs (106, 106-1 bis 106-N); und
Senden (506) eines Niedrigleistungs-Wake-up-Signals, LPWUS, an eine bestimmte entfernte UE (106-1), die sich in einem Leerlaufmodus befindet, wobei das LPWUS eine oder mehrere Eigenschaften aufweist, die ermöglichen, dass ein Leistungsaufwand zum Detektieren des LPWUS bei der bestimmten entfernten UE (106-1) geringer als ein Leistungsaufwand zum Detektieren des WUS von der Basisstation bei der bestimmten entfernten UE (106-1) ist.

7. Relais-UE (104) nach Anspruch 6, die ferner dazu eingerichtet ist, das Verfahren nach einem der Ansprüche 2 bis 5 durchzuführen.

8. Verfahren, das von einer entfernten Benutzereinrichtung, UE, (106-1) für ein zellulares Kommunikationssystem (100) durchgeführt wird, wobei das Verfahren umfasst:
während eines Leerlaufzustands:
Empfangen (502) eines Synchronisationssignals von einer Relais-UE (104) zur Zeit- und Frequenzsynchronisation der entfernten UE (106-1);
Durchführen (504) einer Zeit- und Frequenzsynchronisation auf Grundlage des Synchronisationssignals; und
Detektieren (508) eines Niedrigleistungs-Wake-up-Signals (LPWUS) von der Relais-UE (104), wobei das LPWUS eine oder mehrere Eigenschaften aufweist, die ermöglichen, dass ein Leistungsaufwand zum Detektieren des LPWUS an der entfernten UE (106-1) geringer als ein Leistungsaufwand zum Detektieren eines Wake-up-Signals, WUS, von einer Basisstation an der entfernten UE (106-1) ist, wobei die entfernte UE (106-1) durch die Relais-UE (104) zum Empfangen des WUS von der Basisstation unterstützt wird.

9. Verfahren nach Anspruch 8, wobei das LPWUS eine Bandbreite aufweist, die geringer als diejenige eines WUS von einer Basisstation ist.

10. Verfahren nach Anspruch 8, wobei das LPWUS eine Bandbreite aufweist, die geringer als 180 Kilohertz, kHz, ist.

11. Verfahren nach einem der Ansprüche 8 bis 10, wobei das Detektieren (508) des LPWUS das Detektieren (508) des LPWUS in mindestens einem Orthogonal-Frequency-Division-Multiplexing-Symbol, OFDM-Symbol, umfasst.

12. Verfahren nach einem der Ansprüche 8 bis 11, wobei das Synchronisationssignal und das LPWUS in einem gleichen Subframe sind.

13. Verfahren nach einem der Ansprüche 8 bis 12, wobei das Empfangen (502) des Synchronisationssignals das Empfangen (502) mindestens einer von zwei oder mehr Wiederholungen des Synchronisationssignals umfasst.

14. Entfernte Benutzereinrichtung, UE, (106-1) für ein zellulares Kommunikationssystem (100), wobei die entfernte UE (106-1) dazu eingerichtet ist:
während eines Leerlaufzustands:
Empfangen (502) eines Synchronisationssignals von einer Relais-UE (104) zur Zeit- und Frequenzsynchronisation der entfernten UE (106-1);
Durchführen (504) einer Zeit- und Frequenzsynchronisation auf Grundlage des Synchronisationssignals; und
Detektieren (508) eines Niedrigleistungs-Wake-up-Signals (LPWUS) von der Relais-UE (104), wobei das LPWUS eine oder mehrere Eigenschaften aufweist, die ermöglichen, dass ein Leistungsaufwand zum Detektieren des LPWUS an der entfernten UE (106-1) geringer als ein Leistungsaufwand zum Detektieren eines Wake-up-Signals, WUS, von einer Basisstation an der entfernten UE (106-1) ist,
wobei die entfernte Benutzereinrichtung (106-1) durch die Relais-Benutzereinrichtung (104) zum Empfangen des WUS von der Basisstation unterstützt wird.

15. Entfernte UE (106-1) nach Anspruch 15, die ferner dazu eingerichtet ist, das Verfahren nach einem der Ansprüche 9 bis 14 durchzuführen.

## Revendications

1. Procédé réalisé par un équipement d'utilisateur, UE, relais (104) pour un système de communication cellulaire (100), le procédé comprenant :
la réception (500), provenant d'une station de base, et le décodage d'un signal de réveil, WUS, pour le compte d'un UE distant (106) ou d'un groupe d'UE distants (106-1 à 106-N) ;
la transmission (502) d'un signal de synchronisation pour une synchronisation temporelle et fréquentielle d'un ou plusieurs des UE distants (106, 106-1 à 106-N) ; et
la transmission (506) d'un signal de réveil à faible puissance, LPWUS, vers un UE distant particulier (106-1) qui est dans un mode de veille, dans lequel le LPWUS présente une ou plusieurs caractéristiques qui permettent à un coût de puissance pour détecter le LPWUS au niveau de l'UE distant particulier (106-1) d'être inférieur à un coût de puissance pour détecter le WUS provenant de la station de base au niveau de l'UE distant particulier (106-1).

2. Procédé selon la revendication 1, dans lequel le LPWUS présente une largeur de bande qui est inférieure à celle d'un WUS provenant d'une station de base.

3. Procédé selon la revendication 1, dans lequel le LPWUS présente une largeur de bande qui est inférieure à 180 kilohertz, kHz.

4. Procédé selon l'une quelconque des revendications 1 à 3, dans lequel la transmission (506) du LPWUS comprend la transmission (506) du LPWUS dans au moins un symbole de multiplexage par répartition en fréquences orthogonales, OFDM.

5. Procédé selon l'une quelconque des revendications 1 à 4, dans lequel le signal de synchronisation et le LPWUS sont transmis dans une même sous-trame.

6. Équipement d'utilisateur, UE, relais (104) pour un système de communication cellulaire (100), l'UE relais (104) adapté pour :
recevoir (500) et décoder un signal de réveil, WUS, provenant d'une station de base pour le compte d'un UE distant (106) ou d'un groupe d'UE distants (106-1 à 106-N) ;
transmettre (502) un signal de synchronisation pour une synchronisation temporelle et fréquentielle d'un ou plusieurs des UE distants (106, 106-1 à 106-N) ; et
transmettre (506) un signal de réveil à faible puissance, LPWUS, vers un UE distant particulier (106-1) qui est dans un mode de veille, dans lequel le LPWUS présente une ou plusieurs caractéristiques qui permettent à un coût de puissance pour détecter le LPWUS au niveau de l'UE distant particulier (106-1) d'être inférieur à un coût de puissance pour détecter le WUS provenant de la station de base au niveau de l'UE distant particulier (106-1).

7. UE relais (104) selon la revendication 6 adapté en outre pour réaliser le procédé selon l'une quelconque des revendications 2 à 5.

8. Procédé réalisé par un équipement d'utilisateur, UE, distant (106-1) pour un système de communication cellulaire (100), le procédé comprenant :
tout en étant dans un état de veille :
la réception (502), provenant d'un UE relais (104), d'un signal de synchronisation pour une synchronisation temporelle et fréquentielle de l'UE distant (106-1) ;
la réalisation (504) d'une synchronisation temporelle et fréquentielle sur la base du signal de synchronisation ; et
la détection (508) d'un signal de réveil à faible puissance, LPWUS, provenant de l'UE relais (104), dans lequel le LPWUS présente une ou plusieurs caractéristiques qui permettent à un coût de puissance pour détecter le LPWUS au niveau de l'UE distant (106-1) d'être inférieur à un coût de puissance pour détecter un signal de réveil, WUS, provenant d'une station de base au niveau de l'UE distant (106-1), dans lequel l'UE distant (106-1) est pris en charge par l'UE relais (104) pour la réception du WUS provenant de la station de base.

9. Procédé selon la revendication 8, dans lequel le LPWUS présente une largeur de bande qui est inférieure à celle d'un WUS provenant d'une station de base.

10. Procédé selon la revendication 8, dans lequel le LPWUS présente une largeur de bande qui est inférieure à 180 kilohertz, kHz.

11. Procédé selon l'une quelconque des revendications 8 à 10, dans lequel la détection (508) du LPWUS comprend la détection (508) du LPWUS dans au moins un symbole de multiplexage par répartition en fréquences orthogonales, OFDM.

12. Procédé selon l'une quelconque des revendications 8 à 11, dans lequel le signal de synchronisation et le LPWUS sont dans une même sous-trame.

13. Procédé selon l'une quelconque des revendications 8 à 12, dans lequel la réception (502) du signal de synchronisation comprend la réception (502) d'au moins l'une de deux ou plusieurs répétitions du signal de synchronisation.

14. Équipement d'utilisateur, UE, distant (106-1) pour un système de communication cellulaire (100), l'UE distant (106-1) adapté pour :
tout en étant dans un état de veille :
recevoir (502), provenant d'un UE relais (104), un signal de synchronisation pour une synchronisation temporelle et fréquentielle de l'UE distant (106-1) ;
réaliser (504) une synchronisation temporelle et fréquentielle sur la base du signal de synchronisation ; et
détecter (508) un signal de réveil à faible puissance, LPWUS, provenant de l'UE relais (104), dans lequel le LPWUS présente une ou plusieurs caractéristiques qui permettent à un coût de puissance pour détecter le LPWUS au niveau de l'UE distant (106-1) d'être inférieur à un coût de puissance pour détecter un signal de réveil, WUS, provenant d'une station de base au niveau de l'UE distant (106-1),
dans lequel l'UE distant (106-1) est pris en charge par l'UE relais (104) pour la réception du WUS provenant de la station de base.

15. UE distant (106-1) selon la revendication 15 adapté en outre pour réaliser le procédé selon l'une quelconque des revendications 9 à 14.
